# EUROPEAN PATENT SPECIFICATION

(11) **EP 1 687 548 B1**
(45) Date of publication and mention of the grant of the patent: **10.02.2010**
(21) Application number: 04798318.4
(22) Date of filing: 23.11.2004
(51) Int. Cl.: F16D 65/46, F16D 65/14, B66D 5/08, B66D 5/30, F16D 49/00

(54) **BRAKE AND METHOD FOR ADJUSTING A BRAKE**
BREMSE UND VERFAHREN FÜR EINSTELLBARE BREMSE
FREIN ET PROCEDE DE REGLAGE DE FREIN

(30) Priority: 24.11.2003 FI 20031703
(43) Date of publication of application: 09.08.2006
(73) Proprietor: Kone Corporation, 00330 Helsinki (FI)
(72) Inventor: MUSTALAHTI, Jorma, FI-05620 Hyvinkää (FI); AULANKO, Esko, FI-04230 Kerava (FI)
(74) Representative: Zipse Habersack Kritzenberger
(86) International application number: PCT/FI2004/000709
(87) International publication number: WO 2005/050051

(56) References cited:
- EP-A- 0 963 942
- WO-A-01/85593
- GB-A- 561 776
- US-A- 4 049 089
- US-A1- 2002 074 194

## Description

The present invention relates to a brake as defined in the preamble of claim 1 and to a method as defined in the preamble of claim 4. Such a brake and method are known from GB 561 776.

One of the objectives in elevator development work is to achieve an efficient and economical utilization of building space. In recent years, this development work has produced various elevator solutions without machine room, among other things. Good examples of elevators without machine room are disclosed in specifications EP 0 631 967 (A1) and EP 0 631 968. The elevators according to these specifications are fairly efficient in respect of space utilization as they have made it possible to eliminate the space needed for the machine room in the building without a need to enlarge the elevator shaft. The machine used in the elevators according to these specifications is compact in at least one direction, but in other directions it may be much larger than conventional elevator machines.

In these basically good elevator solutions, the space and placement of the hoisting function limits the freedom of choice in elevator lay-out solutions. As the aim is to achieve elevators of a more compact construction, the size of the hoisting machine is a factor that encourages the search for new solutions in the construction of the machine or parts of it. When hoisting ropes that are thinner than the hoisting ropes conventionally used in elevators, ropes of a thickness below 8 mm or otherwise flexible ropes or equivalent are used, there is no problem in using a traction sheave of a smaller diameter. This permits the use of a smaller hoisting machine as the torque requirement is smaller. Likewise, the brakes holding or braking the traction sheave can be made smaller due to the smaller braking moment required. Thus, the concept of an elevator with a small traction sheave, i.e. a traction sheave clearly below 330 mm, even only 100 mm in diameter, enables a reappraisal of the various features associated with the hoisting machine. The results of such reappraisal may of course be applicable to other elevators besides those with a small traction sheave.

Elevators without machine room generally use gearless machines. The conventional brake solution in the machines is a shoe brake in which a brake shoe has been arranged to be pressed against a braking rim by a spring in braking situations and in which the brake is released by lifting the brake shoe from the braking rim by means of an electromagnet or a similar coil solution. A known method of adjusting the shoe brake, in other words the air gap of the brake, is to move the entire brake in relation to the machine by utilizing the adjustment tolerance provided in the fastening screws of the brake. For example, if the brake has been secured to the machine frame with four screws with distance adjustment provided in conjunction with them, then in practice it may be difficult to perform a successful adjustment because it is difficult to tighten the screws evenly, and thus an unsuccessful adjustment has the result that the brake and the machine are incorrectly positioned relative to each other and further that a "wedge-shaped" air gap appears between the brake shoe and the braking rim, which means that the air gap is clearly larger at one edge than at the other edge of the air gap. A "wedge-shaped" air gap leads to uneven stress on the brake shoe and indefinite operation of the brake. Thus, if the machine has several brakes, the operation of each brake may differ from that of the others, and consequently one of the brakes undergoes greater wear than the others.

The object of the present invention is to overcome the above-mentioned drawbacks and create a mechanically simple and reliable brake and a method of adjusting the brake. It is an object of the invention to achieve an elevator hoisting machine that has a lighter construction at least in respect of the brake. A further object is to achieve a compact machine or at least a compact brake structure.

The brake of the invention is characterized by what is disclosed in the characterization part of claim 1, and the method of the invention for adjusting a brake is characterized by what is disclosed in the characterization part of claim 4. Other embodiments of the invention are characterized by what is disclosed in the other claims.

The brake and method of the invention, in short the solution of the invention has the advantage of simplicity of the adjustment function. By applying the invention, it will be easy to achieve a compact and quiet brake structure that is well suited for use in elevators without machine room. The brake is reliable in operation, easy to maintain and a clearly defined construction. The compact and clear construction comprising a relatively small number of components also means a reasonable manufacturing cost of the brake. The brake of the invention is easy to install in conjunction with an elevator machine and simple to adjust so as to make it ready for operation. As the adjustment does not substantially change the orientation of the brake shoe relative to the braking rim, the brake wears evenly.

In the following, the invention will be described in detail with reference to an embodiment example and the attached drawings, wherein
- Fig. 1: represents a hoisting machine according to the invention with two brakes, and
- Fig. 2: presents a brake according to the invention.

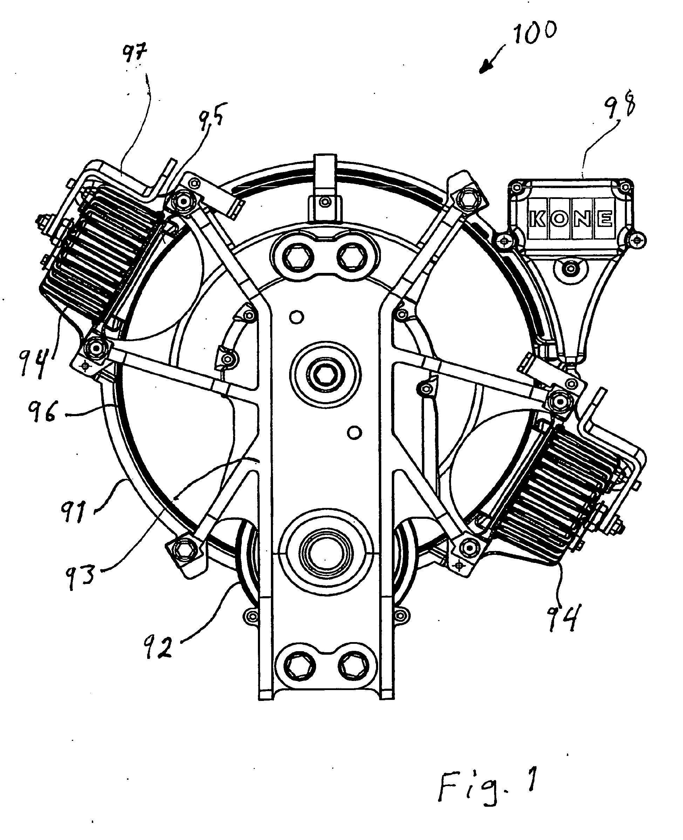

Fig. 1 presents a hoisting machine unit 100, which comprises an actual hoisting machine 91 provided with a traction sheave (the traction sheave is not shown in the figure) and an auxiliary pulley 92 guiding the passage of the ropes, which pulley can also be used to rig the machine as a so-called "double wrap" machine. The hoisting machine 91 and auxiliary pulley 92 are mounted on a supporting frame 93, whereby the hoisting machine unit is secured in place in the elevator. The supporting frame 93 also forms part of the stiffening structure of the actual machine 91. The hoisting machine 91 is provided with two brakes 94, in which a brake shoe 95 has been arranged to be pressed against a braking rim 96 rotating with the traction sheave. Connected to the hoisting machine unit 100 is a switch box 98, through which the control of the brakes and hoisting machine has been arranged either as electric current feeds only or as a combination of current feeds and control and/or monitoring functions. The brake has a release lever 97, by means of which the brake can be released without electric control. For operating this lever 97, it is possible to connect an operating wire rope or some other power transmission means. If emergency release of the brake is implemented using an electric arrangement actuated e.g. by a stand-by battery, then no lever 97 is needed.

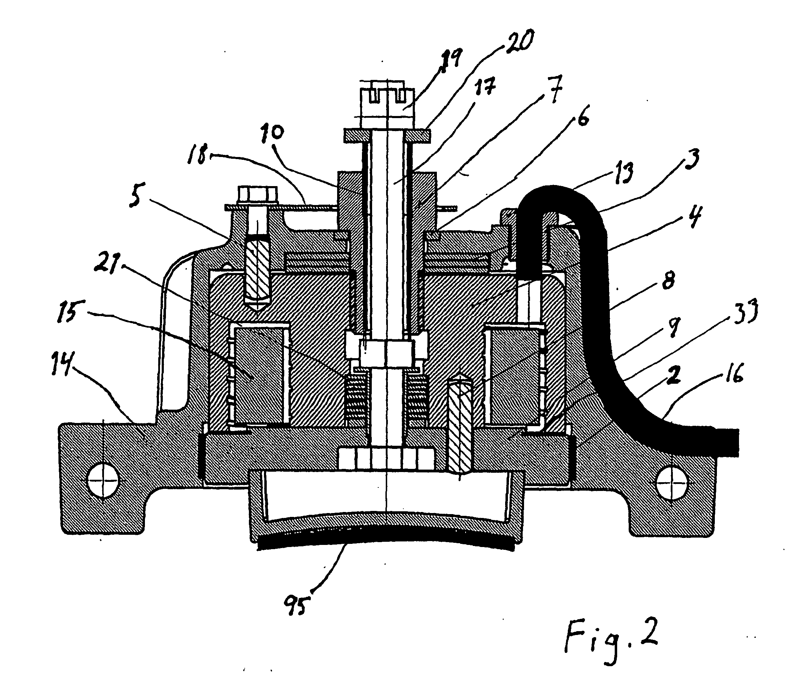

Fig. 2 illustrates the structure of the brake 94 in a sectioned view. The brake frame 14 is secured by a rigid fastening arrangement to the body of the hoisting machine 91. Placed in an opening in the brake frame is an adjusting nut 7, which is pressed against the brake frame via a washer 6 and engages a magnet body 4 by an external thread. Between the magnet body and the brake frame are cup springs 3, which tend to push the brake frame and the magnet body apart from each other. In this way, a screw adjustment is achieved wherein the force of the cup springs 3 ensures that the mutual clearances of the assembly consisting of the magnet body 4, the washer 6 and further the brake frame 14 remain small and unchanging in direction, so that the adjustment thus achieved and performed by means of the nut 7 is accurate and easy to manage. To compensate the wear of the brake shoe, the functional assembly consisting of the magnet body 4 and a moving frame 9, which preferably is a structure mainly or completely made of iron or steel, is moved by means of the adjusting nut 7 closer to the braking rim 96. The adjusting nut 7 is also used in connection with manufacture or installation of the brake or renewal of the brake shoe to adjust the clearance between the brake shoe and the braking rim to a suitable size. The magnet body 4 is a bobbin type structure, preferably mainly or completely made of iron or steel, which is provided with a magnetizing coil 15, to which is connected a conductor 16 that contains the electric conductors and is introduced into the brake via a lead-through 13. Through the adjusting nut 7 goes a sleeve 10 and a shank 17. Under the nut 19 at the end of the shank 17 is a plate 20, by which the brake release lever 97 lifts the brake shoe to release the brake. The other end of the shank 17 is connected to the moving frame 9 of the brake, to which the brake shoe 95 is secured. A brake spring 21 is provided between the brake frame 4 and the moving frame 9 to keep the brake frame and the moving frame apart from each other when the electromagnet consisting of the coil 15 and the magnet body 4 is not attracting them towards each other. The force of the cup spring stackup 3 between the magnet body and the brake frame is greater than the force generated by the brake spring stackup 21, so the force of pressure of the brake shoe 95 against the braking rim 96 is in practice determined by the dimensioning of the brake spring stackup, and on the other hand, due to the stiffness of the cup spring stackup, the adjustment settings do not significantly depend on whether the brake is engaged or not. The sleeve 10 is designed to prevent adjustment of the brake in a way such that brake would remain permanently released, in other words, to prevent the gap between the plate 20 and the nut 17 from being reduced so much that the shank 17 would be supported by the nut 7 via the brake release lever 17. Pin 5 prevents rotation of the brake frame 14 and the magnet body 4 relative to each other, and pin 8 similarly prevents rotation of the moving frame 9 and the magnet body 4 relative to each other. The mutual motion occurring between the moving frame 9 and the magnet body 4 when the brake is being released and closed and in connection with adjustment is controlled by means of a sliding bearing 2. The control of the sliding bearing 2 contributes towards allowing the adjustment to be made using only one adjusting nut 7. As the force effect produced when the brake is on is passed via the sliding bearing 2 to the brake frame over a very short distance, in other words, as the sliding bearing is very close to the braking rim, the brake structures can be made fairly light. With wear of the brake shoe 95, the distance of motion or the air gap between the brake shoe and the braking rim 96 increases, and so naturally does the air gap between the moving frame 9 and the magnet body 4. The adjusting nut 7 is locked by means of a locking plate 18 to ensure that the position of the adjusting nut and thus the position of the magnet body 4 relative to the brake frame 14 can not change by themselves between adjustments. This leads to a greater kinetic energy of the moving frame 9 when the brake is released and engaged, because the force of the electromagnet or brake spring is allowed to act for a longer time and further the stroke energy becomes greater, causing harder release and engagement noises. A longer stroke also has other disadvantages, such as increased wear of the brake shoe and somewhat longer brake operating times. The stroke noise produced upon release of the brake is damped by using a damping ring 33 made of a damping medium, e.g. rubber or silicone, which is placed in a space reserved for it between the moving frame 9 and the magnet body 4. This gap reserved for the damping ring is, even after the damping ring has been compressed, preferably larger than the suitable remanence air gap to be left between the energized electromagnet and the moving frame 9, which will allow easy dimensioning of the damping ring as it is possible to maintain a reasonable relative compression of the thickness.

The skilled person understands that the invention is not limited to the description presented by way of example, and that the embodiments of the invention may be varied within the scope of the claims below. Within this scope the features of different conceivable embodiments may also be applied within the limits of technical feasibility to replace features of other embodiments. The skilled person also understands that the machine on which the brake is mounted may be different and that the number of brakes used in conjunction with the machine may be other than two as described by way of example.

## Claims

1. A brake (94) for an elevator machine, comprising a brake frame (14), an electromagnet consisting of a coil (15) and a magnet body (4) and a moving frame (9) with a brake shoe (95) secured to it, wherein the brake has only one adjusting nut (7), **characterized in that** the rotation of which has been arranged to change the mutual distance between the brake frame and the magnet body in the direction of the stroke of the moving frame (9).

2. A brake according to claim 1, **characterized in that** the brake (94) has been arranged on the elevator machine (91) to engage a braking rim (96) rotating with the traction sheave.

3. A brake according to claim 1 or 2, **characterized in that**, in the brake (94), the motion between the moving frame (9) and the brake frame (94) is controlled by means of a sliding bearing (2).

4. A method for adjusting the brake (94) of an elevator machine, said brake comprising a brake frame (14), an electromagnet consisting of a coil (15) and a magnet body (4) and a moving frame (9) with a brake shoe (95) secured to it, wherein in the brake, only one adjusting nut (7) is used **characterized in that** to change the mutual distance between the brake frame and the magnet said adjusting nut is used body in the direction of the stroke of the moving frame (9).

5. A method according to claim 4, **characterized in that** the motion between the moving frame (9) and the brake frame (94) is controlled by means of a sliding bearing (2).

## Patentansprüche

1. Bremse (94) für eine Aufzugsmaschine, umfassend einen Bremsrahmen (14), einen Elektromagneten, der aus einer Wicklung (15) und einem Magnetkörper (4) besteht, und einen sich bewegenden Rahmen (9) mit einem daran befestigten Bremsschuh (95), wobei die Bremse nur eine Einstellnut (7) aufweist, **dadurch gekennzeichnet, dass** deren Drehung konzipiert ist, den wechselseitigen Abstand zwischen dem Bremsrahmen und dem Magnetkörper in Richtung des Wegs des sich bewegenden Rahmens (9) zu ändern.

2. Bremse nach Anspruch 1, **dadurch gekennzeichnet, dass** die Bremse (94) auf der Aufzugsmaschine (91) angeordnet ist, um mit einer Bremsrandzone (96) in Eingriff zu treten, die sich mit der Treibscheibe dreht.

3. Bremse nach Anspruch 1 oder 2, **dadurch gekennzeichnet, dass** in der Bremse (94) die Bewegung zwischen dem sich bewegenden Rahmen (9) und dem Bremsrahmen (94) gesteuert wird, mittels eines Gleitlagers (2).

4. Verfahren zum Einstellen der Bremse (94) einer Aufzugsmaschine, welche Bremse einen Bremsrahmen (14) umfasst, einen Elektromagneten, der aus einer Wicklung (15) und einem Magnetkörper (4) besteht, und einen sich bewegenden Rahmen (9) mit einem daran befestigten Bremsschuh (95), wobei in der Bremse lediglich eine Einstellnut (7) verwendet wird, **dadurch gekennzeichnet, dass** diese Einstellnut verwendet wird, um den wechselseitigen Abstand zwischen den Bremsrahmen und dem Magnetkörper in Richtung des Weges des sich bewegenden Rahmens (9) zu ändern.

5. Verfahren nach Anspruch 4, **dadurch gekennzeichnet, dass** die Bewegung zwischen dem sich bewegenden Rahmen (9) und dem Bremsrahmen (94) gesteuert wird durch ein Gleitlager (2).

## Revendications

1. Frein (94) destiné à un mécanisme d'ascenseur comprenant une cage de frein (14), un électro-aimant, composé d'une bobine (15) et d'un corps d'aimant (4), et un cadre mobile (9) auquel est fixé un segment de frein (95), dans lequel le frein ne comporte qu'un écrou de réglage (7), **caractérisé par le fait que** sa rotation a été conçue pour changer la distance mutuelle entre la cage de frein et le corps d'aimant dans le sens de la course du cadre mobile (9).

2. Frein selon la revendication 1, **caractérisé par le fait que** le frein (94) a été conçu sur le mécanisme d'ascenseur (91) pour venir en prise avec une couronne de freinage (96) en rotation avec la poulie d'entraînement.

3. Frein selon la revendication 1 ou 2, **caractérisé par le fait que**, dans le frein (94), le mouvement entre le cadre mobile (9) et la cage de frein (94) est commandé au moyen d'un palier à glissement (2).

4. Procédé destiné à régler le frein (94) d'un mécanisme d'ascenseur, ledit frein comprenant une cage de frein (14), un électro-aimant, composé d'une bobine (15) et d'un corps d'aimant (4), et un cadre mobile (9) auquel est fixé un segment de frein (95), dans lequel, seul un écrou de réglage (7) est utilisé dans le frein, **caractérisé par le fait que** ledit écrou de réglage est utilisé pour changer la distance mutuelle entre la cage de frein et le corps d'aimant dans le sens de la course du cadre mobile (9).

5. Procédé selon la revendication 4, **caractérisé par le fait que** le mouvement entre le cadre mobile (9) et la cage de frein (94) est commandé au moyen d'un palier à glissement (2).
